# EUROPEAN PATENT SPECIFICATION

(11) **EP 2 830 121 B1**
(45) Date of publication and mention of the grant of the patent: **15.01.2020**
(21) Application number: 14156288.4
(22) Date of filing: 24.02.2014
(51) Int. Cl.: H01M 2/04

(54) **Rechargeable battery**
Wiederaufladbare Batterie
Batterie rechargeable

(30) Priority: 26.07.2013 US 201361858816 P; 06.02.2014 US 201414174088
(43) Date of publication of application: 28.01.2015
(73) Proprietor: Samsung SDI Co., Ltd., Yongin-si, Gyeonggi-do (KR)
(72) Inventor: You, Tai-Sun, Yongin-si (KR); Kim, Yong-Sam, Yongin-si (KR); Song, Jang-Hyun, Yongin-si (KR)
(74) Representative: Gulde & Partner

(56) References cited:
- EP-A1- 1 043 784
- JP-A- 2011 181 215
- US-A1- 2006 240 320

## Description

### BACKGROUND

### 1. Field

The described technology relates generally to a rechargeable battery. More particularly, the described technology relates generally to an improved coupling structure of a cap plate and a case.

### 2. Description of the Related Art

A rechargeable battery can be repeatedly charged and discharged unlike a primary battery that is incapable of being recharged. A low-capacity rechargeable battery is used for a small portable electronic device such as a mobile phone, a laptop computer, and a camcorder. A large-capacity rechargeable battery is widely used as a power supply for driving a motor of a hybrid vehicle and the like.

Recently, a high-output rechargeable battery using a non-aqueous electrolyte of high energy density has been developed, and a plurality of high-output rechargeable batteries are connected in series to constitute a large-capacity battery module so as to be used for driving a motor of a device, e.g., an electric automobile or the like, that requires much power.

Also, a single high-output rechargeable battery may be formed of a plurality of rechargeable batteries coupled to each other in series, and the rechargeable battery may have a cylindrical shape or a prismatic shape.

In addition, an electrode assembly is installed in the case of the rechargeable battery, and a cap plate is coupled to an opening of the case such that the case is closed and sealed.

Here, the cap plate and the case may be coupled by welding beads between the cap plate and the opening of the case.

However, when the welding bead being used in coupling of the cap plate and the case through bead-welding is welded between the cap plate and the opening of the case, a constant amount of the welding beads are welded to the cap plate and the opening of the case but remaining welding beads protrude such that a protruding portion may be formed between the opening of the case and the cap plate.

Thus, the volume of the rechargeable battery may be increased due to the protruding portion formed in the opening of the case.

When the protruding portion formed in the opening of the case is increased more than a predetermined size, the rechargeable battery having the protruding portion formed therein contacts its adjacent rechargeable battery in driving of a battery module formed of a plurality of rechargeable batteries such that a short-circuit may occur.

JP 2011-181215 A discloses a battery cell with a casing comprising side walls and a cap disposed on the side walls, fitted in an opening of the case. The cap is dimensioned such that it can be laser welded to the top of the case.

EP 1 043 784 A1 discloses a rectangular battery cell with a rectangular case and a sealing plate that is leaser welded to the case and hermetically seals the case.

US 2006/0240320 A1 discloses a rechargeable battery with a case and a cap plate, wherein the latter has an inclined edge surface as its circumference that is laser welded to the case via the inclined edge surface.

The above information disclosed in this Background section is only for enhancement of understanding of the background of the described technology and therefore it may contain information that does not form the prior art that is already known in this country to a person of ordinary skill in the art.

### SUMMARY

According to the present invention, a rechargeable battery is provided in accordance with the appended claims.

The described technology has been made in an effort to provide a rechargeable battery having a structure that can prevent a protruding portion from being formed between a cap plate and an opening of a case by a welding bead

### BRIEF DESCRIPTION OF THE DRAWINGS

FIG. 1 is a perspective view of a rechargeable battery according to a first exemplary embodiment of the present invention.
FIG. 2 is an exploded perspective view of the rechargeable battery of FIG. 1.
FIG. 3 is a cross-sectional view of the rechargeable battery of FIG. 1, taken along the line III-III.
FIG. 4 is a cross-sectional view of the rechargeable battery of FIG. 1, taken along the line IV-IV.
FIG. 5 is a top plan view of a rechargeable battery according to an exemplary variation of the first exemplary embodiment of the present invention.
FIG. 6 is a cross-sectional view of a rechargeable battery, seen from the front, according to a second exemplary embodiment of the present invention.
FIG. 7 is a cross-sectional view of the rechargeable battery, seen from a side, according to the second exemplary embodiment of the present invention.
FIG. 8 is a perspective view of a rechargeable battery according to a third exemplary embodiment of the present invention.
FIG. 9 is a cross-sectional view of the rechargeable battery of FIG. 8, taken along the line IX-IX.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. Like reference numerals designate like elements throughout the specification.

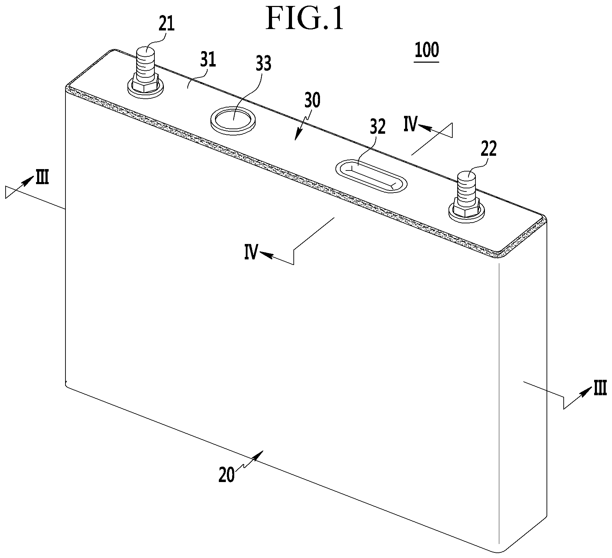

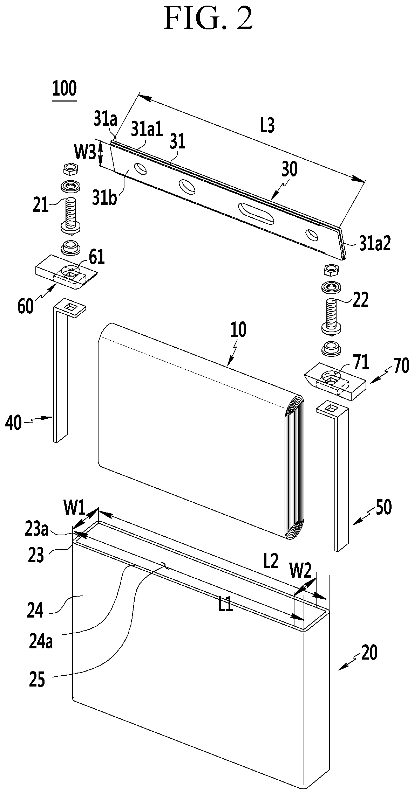

FIG. 1 is a perspective view of a rechargeable battery according to a first exemplary embodiment of the present invention and FIG. 2 is an exploded perspective view of the rechargeable battery of FIG. 1.

Referring to FIG. 1 and FIG. 2, a rechargeable battery 100 according to the present exemplary embodiment may include an electrode assembly 10, a case 20 in which the electrode assembly 10 is installed, and a cap assembly 30 coupled to an opening of the case 20.

In the present exemplary embodiment, the rechargeable battery 100 is described as a lithium ion rechargeable battery formed in the shape of a prism. However, the present invention is not limited thereto, and the present invention may be applied to a lithium polymer battery, a cylindrical battery, or the like.

The case 20 according to the present exemplary embodiment forms an entire exterior of the rechargeable battery 100 and may be made of a conductive metal such as aluminum, an aluminum alloy, or nickel-plated steel.

In addition, positive and negative terminals 21 and 22 according to the present exemplary embodiment may be electrically connected with current collectors including first and second current collectors 40 and 50. The first current collector 40 will be referred to as a positive current collector and the second current collector 50 will be referred to as a negative current collector.

For example, the positive and negative terminals 21 and 22 may be coupled with the positive and negative current collectors 40 and 50 by welding. However, the present invention is not limited thereto, and the positive and negative terminals 21 and 22 and the positive and negative current collectors 40 and 50 may be integrally formed.

In addition, an insulation member may be provided between the electrode assembly 10 and the cap plate 31. Here, the insulation member may include first and second lower insulation members 60 and 70, and the first lower insulation member 60 and the second lower insulation member 70 may respectively be provided between the electrode assembly 10 and the cap plate 31.

In addition, the positive terminal 21 and the negative terminal 22 may be fixed to the first lower insulation member 60 and the second lower insulation 70 by being inserted to through holes 61 and 72 respectively formed in the first and second lower insulation members 60 and 70.

The case 20 according to the present exemplary embodiment is formed in the shape of a prism, and may include a pair of first side surfaces 23 facing each other and a pair of second side surfaces 24 connecting the pair of first side surfaces 23 and facing each other.

The first side surfaces 23 and the second side surfaces 24 of the case 20 according to the present exemplary embodiment may respectively include a first coupling portion 23a and a second coupling portion 24a to which the cap plate 31 is coupled.

The cap assembly 30 according to the present exemplary embodiment may include a cap plate 31 covering the opening 25 of the case 20, a vent portion 32 where a notch is formed, and an electrolyte injection opening 33.

In addition, the cap plate 31 according to the present exemplary embodiment may include a first plate 31a and a protruding portion 31b.

Here, the protruding portion 31b of the cap plate 31 according to the present exemplary embodiment may protrude along a length or width direction of the first plate 31a.

In addition, in the present exemplary embodiment, a length L3 and a width W3 of the first plate 31a are formed smaller than a length L1 and a width W1 of the case 20 and formed larger than a length L2 and a width W2 of the opening 25 of the case 20.

The length and the width of the protruding portion 31b of the cap plate 31 according to the present exemplary embodiment may be substantially equivalent to the length L2 and the width W2 of the opening 25 of the case 20.

Here, the protruding portion 31b of the cap plate 31 may be tightly fitted into the opening 25 of the case 20.

Thus, according to the present exemplary embodiment, the protruding portion 31b of the cap plate 31 is tightly fitted to the opening 25 of case 20 so that sealing property of the opening 25 can be improved and coupling strength between the cap plate 31 and the case 20 can be increased.

In addition, the cap plate 31a according to the present exemplary embodiment is coupled to an inlet portion of the opening 25 of the case 20.

In further detail, the first plate 31a according to the present exemplary embodiment is formed in the shape of a quadrangle, and may include a pair of first ends 31a1 disposed at one end and a pair of second ends 31a2 disposed at the other end. The pair of second ends 31a2 connects the first ends 31a1 and faces each other.

Thus, when the first plate 31a according to the present exemplary embodiment is installed in the inlet portion of the opening 25, the first ends 31a1 of the first plate 31a may be installed in the first coupling portions 23a of the first side surface 23 of the case 20.

In addition, the second ends 31a2 of the first plate 31a according to the present exemplary embodiment may be installed in the second coupling portions of the second side surface 24a of the case 20.

In this case, according to the present exemplary embodiment, the length L3 and the width W3 of the first plate 31a are smaller than the length L1 and the width W1 of the case 20, and therefore the first ends 31a1 and the second ends 31a1 of the first cap plate 31a may be partially installed in the first and second coupling portions 23a and 24a of the first and second side surfaces 23 and 24 of the case 24, respectively.

Thus, the first plate 31a can be coupled to the periphery area of the opening 25 of the case 20 by welding the welding beads between portions in the first and second coupling portions 23a and 24a of the first and second side surfaces 23 and 24 of the case 20, in which the first and second ends 31a1 and 31a2 of the first plate 31a are not provided and the first and second ends 31a and 31a2 of the first plate 31a.

Hereinafter, a welding bead portion formed in the first and second side surfaces 23 and 24 of the case 20 will be described in further detail.

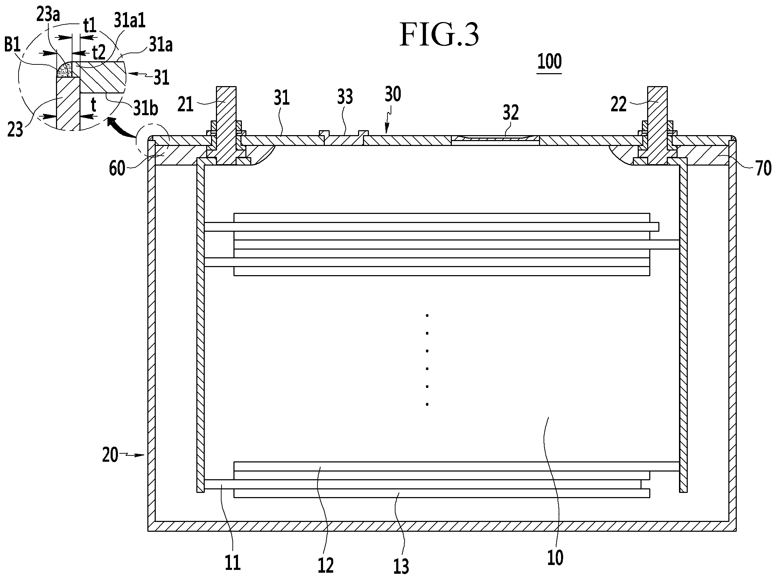

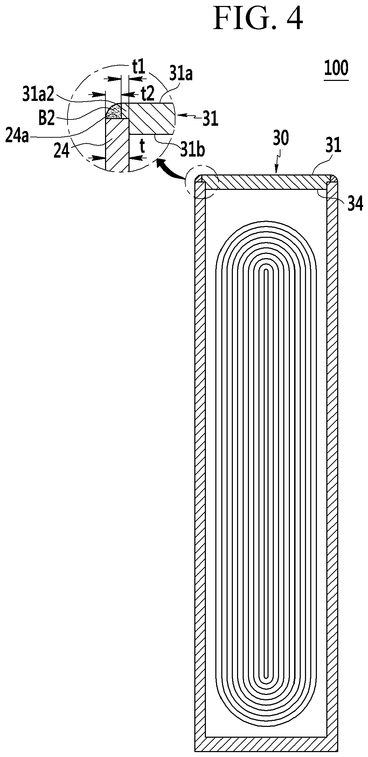

FIG. 3 is a cross-sectional view of the rechargeable battery of FIG. 1, taken along the line III-III, and FIG. 4 is a cross-sectional view of the rechargeable battery of FIG. 1, taken along the line IV-IV.

As shown in FIG. 3, the electrode assembly 10 according to the present exemplary embodiment may be formed by disposing a separator 13, which is an insulator, between the positive electrode 11 and the negative electrode 12 and winding the positive electrode 11, the negative electrode 13, and the separator 13 together.

Referring to FIG. 3, the first end 31a1 of the first plate 31a may be provided in a portion of the first coupling portion 23a of the first side surface 23 according to the present exemplary embodiment.

In further detail, a thickness t of the first side surface 23 of the case 20 according to the present exemplary embodiment may include a first thickness portion t1 and a second thickness portion t2.

Here, the thickness of the first thickness portion t1 of the first side surface 23 according to the present exemplary embodiment may be equivalent to the length of the first end 31a1 of the first plate 31a provided in the first coupling portion 23a of the first side surface 23.

Thus, according to the present exemplary embodiment, the length of the first end 31a1 of the first plate 31a provided in the first coupling portion 23a may be equivalent to the thickness of the first thickness t1 of the first side surface 23.

In addition, the length of a portion where the first plate 31a of the first coupling portion 23a is not provided may be equivalent to the thickness of the second thickness portion t2 of the first side surface 23.

Thus, according to the present exemplary embodiment, a first welding bead portion B1 may be formed in a portion that corresponds to the second thickness portion t2 of the first side surface 23 of the case 20.

In this case, the thickness of the first welding bead portion B1 according to the present exemplary embodiment may be equivalent to the thickness of the second thickness portion t2 of the first side surface 23.

The ratio of the second thickness portion t2 of the first side surface 23 and the thickness t of the first side surface 23 preferably ranges between 0.5 and 0.9, more preferably between 0.7 und 0.9. The ratio of a second thickness portion of the second side surface 24 and the thickness t of the second side surface 24 preferably ranges between 0.5 and 0.9, more preferably between 0.5 und 0.7. In this case, the first side surface 23 is preferably the shorter side surface and the second side surface 24 is preferably the longer side surface.

The second thickness portion t2 of the first side surface 23 according to the present exemplary embodiment is preferably 0.6 times the thickness t of the first side surface 23.

Thus, the thickness of the first welding bead portion B1 according to the present exemplary embodiment can be 0.6t, which is substantially 0.6 times the thickness t of the first side surface 23.

In further detail, according to the present exemplary embodiment, the first plate 31a may be coupled to the periphery area of the opening 25 of the case 20 by welding a welding bead.

Here, the first plate 31a can be coupled by welding to the first side surface 23 of the case 20 by welding the welding beads between the first end 31a1 of the first plate 31a and a portion in the first coupling portion 23a of the first side surface 23 of the case 20, in which the first end 31a1 is not provided, that is, a portion where the second thickness portion t2 of the first side surface 23 is provided.

Thus, according to the present exemplary embodiment, the first welding bead portion B1 can be formed in the portion where the first end 31a1 of the first plate 31a is not provided, that is, the portion where the second thickness portion t2 of the first side surface 23 is provided.

Since the first welding bead portion B1 according to the present exemplary embodiment is formed in the second thickness portion t2 of the first side surface 23, the first welding bead portion B1 does not protrude over the first side surface 23 of the case 20.

That is, according to the present exemplary embodiment, the entire length L of the case 20 is not changed even through the first welding bead portion B1 is formed in the first coupling portion 23a of the first side surface 23.

Referring to FIG. 4, the second end 31a2 of the first plate 31a may be provided in one portion of the second coupling portion 24a of the second side surface 24.

In further detail, the thickness t of the second side surface 24 of the case 20 according to the present exemplary embodiment may include the first thickness portion t1 and the second thickness portion t2.

Here, the thickness of the first thickness portion t1 of the second side surface 24 may be equivalent to the length of the second end 31a2 of the first plate 31a provided in the second coupling portion 24a of the second side surface 24.

Thus, according to the present exemplary embodiment, the length of the second end 31a2 of the first plate 31a provided in the second coupling portion 24a may be equivalent to the thickness of the first thickness portion t1 of the second side surface 24.

In addition, according to the present exemplary embodiment, a length of the portion where the first plate 31a of the second coupling portion 24a is not provided may be equivalent to the thickness of the second thickness portion t2 of the second side surface 24.

Thus, a second welding bead portion B2 may be formed in a portion corresponding to the second thickness portion t2 of the second side surface 24 of the case 20 according to the present exemplary embodiment.

In this case, the thickness of the second welding bead portion B2 according to the present exemplary embodiment may be equivalent to the thickness of the second thickness portion t2 of the second side surface 24.

In addition, the thickness of the second thickness portion t2 of the second side surface 24 is preferably 0.6 times the thickness t of the second side surface 24.

Thus, the thickness of the second welding bead portion B2 can be 0.6t, that is, substantially 0.6 times the thickness t of the second side surface 24 according to the present exemplary embodiment.

In further detail, the first plate 31a may be coupled to the periphery area of the opening 25 of the case 20 by welding the welding bead according to the present exemplary embodiment.

Here, the welding bead is welded to a portion between the second end 31a2 of the first plate 31a and a portion of the second coupling portion 24a of the second side surface 24 of the case 20, in which the second end 31a2 of the first plate 31a is not provided, that is, a portion where the second thickness portion t2 of the second side surface 24 is provided, to couple the first plate 31a to the second side surface 24 of the case 20 by welding.

Therefore, according to the present exemplary embodiment, the second welding portion B2 may be formed in the portion where the second thickness portion t2 of the second side surface 24 is provided, that is, the portion where the second end 31a2 of the first plate 31a is not provided.

Since the second welding bead portion B2 is formed in the second thickness portion t2 of the second side surface 24, the second welding bead portion B2 does not protrude over the second side surface 24 of the case 20.

That is, the entire width W1 of the case 20 may not be changed even through the second bead portion B2 is formed in the second coupling portion 24a of the second side surface 24.

Thus, according to the present exemplary embodiment, the welding bead portions B1 and B2 formed between the case 20 and the cap plate 31 can be prevented from protruding over the length L1 and the width W1 of the case 20 in the directions of the length L1 and the width W1 of the case 20.

Preferably, the welding bead portions B1 and B2 completely surround the cap plate. More preferably the welding bead portions B1 and B2 completely surround the first plate 31a. Preferably, the welding bead portions B1 and B2 are only formed in a surrounding area in which the first end 31a1 and the second end 31a2, respectively, of the first plate 31a are not provided.

Preferably, the first plate 31a and the protruding portion 31b each have a uniform thickness. Preferably, the ratio of the thickness of the first plate 31a and the thickness of the protruding portion 31b ranges between 0.3 and 3, more preferably between 0.5 and 2, more preferably between 0.75 and 1.25 and still more preferably between 0.9 and 1.1.

Accordingly, the rechargeable battery 100 according to the present exemplary embodiment can be prevented from being increased in volume by the welding beads formed in welding-coupling of the case 20 and the cap plate 31.

In addition, the welding bead formed when the case 20 and the cap plate 31 are coupled by welding is electrically connected with another adjacent rechargeable battery so that internal short-circuit in the rechargeable battery 100 can be prevented according to the present exemplary embodiment.

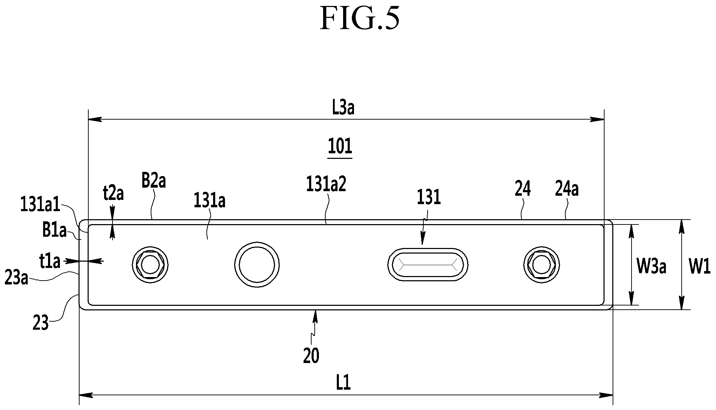

FIG. 5 is a top plan view of a rechargeable battery according to an exemplary variation of the first exemplary embodiment of the present invention.

Referring to FIG. 5, a rechargeable battery 101 according to the present exemplary embodiment is the same as the rechargeable battery 100 according to the first exemplary embodiment of the present invention, excluding a cap plate 131, and therefore the same structure of the rechargeable battery 100 of the first exemplary embodiment of the present invention will not be further described.

A first plate 131a of the cap plate 131 according to the present exemplary embodiment may include a pair of first ends 131a1 disposed at one end and a pair of second ends 131a2 disposed at the other end and connecting the first ends 131a1. The first ends 131a1 and the second ends 131a2 are disposed in the shape of a quadrangle.

In addition, in the present exemplary embodiment, a length L3a and a width W3a of the first plate 131a of the cap plate 131 may be smaller than a length L1 and a width W1 of a case 20.

Thus, when the first plate 131a according to the present exemplary embodiment is provided in an inlet of an opening, the first end 131a1 of the first plate 131a may be provided in a first coupling portion 23a of a first side surface 23 of the case.

In addition, the second ends 131a2 may be provided in a second coupling portion 24a of a second side surface 24 of the case according to the present exemplary embodiment.

In this case, according to the present exemplary embodiment, since the length L3a and the width W3a of the first plate 131a are smaller than the length L1 and the width W1 of the case 20, the first ends 131a1 and the second ends 131a2 of the first plate 131a may be respectively provided in parts of the first and second coupling portions 23a and 24a of the first and second side surfaces 23 and 24.

According to the present exemplary embodiment, a first welding bead portion B1a may be formed in a portion in the first coupling portion 23a of the first side surface 23, in which the first end 131a1 of the first plate 131a is not formed.

In addition, a second welding bead portion B2a may be formed in a portion in the second coupling portion 24a of the second side surface 24, in which the second end 131a2 of the first plate 131a is not formed.

Here, a thickness t1a of the first welding bead portion B1a formed in the first coupling portion 23a of the first side surface 23 is thicker than a thickness t2a of the second welding bead portion B2a formed in the second coupling portion 24a of the second side surface 24.

For example, when the first side surface 23 and the second side surface 24 according to the present exemplary embodiment have the same thickness t, the thickness t2a of the second welding bead portion B2a is 0.6 times the thickness t of the first and second side surfaces 23 and 24 and the thickness t1a of the first welding bead portion B1a is 0.7 times to 0.9 times the thickness t of the first and second side surfaces 23 and 24.

In further detail, the first ends 131a1 of the first plate 131a according to the present exemplary embodiment correspond to short sides of the rectangle-shaped first plate 131a and the second ends 131a2 correspond to the long sides of the rectangle-shaped first plate 131a.

Thus, an area where the first welding bead portion B1a can be formed in the first coupling portion 23a of the first side surface 23 of the case 20 is relatively smaller than an area where the second welding bead portion B2a can be formed in the second coupling portion 24a of the second side surface 24 of the case 20.

Thus, since the thickness t1a of the first welding bead portion B1a can be thicker than the thickness t2a of the second welding bead portion B2a, the coupling strength of the first plate 131a and the case 20 can be comparatively uniformly maintained through the long and short sides of the rectangle-shaped first plate 131a.

Preferably a ratio of a length of the short sides of the rectangle-shaped first plate 131a and a length of the long sides of the rectangle-shaped first plate 131a ranges between 0.1 and 0.4, more preferably between 0.14 and 0.35 and still more preferably between 0.2 and 0.3. Preferably an absolute value of a difference between a ratio of the thickness t2a of the second welding bead portion B2a and the thickness t1a of the first welding bead portion B1a and a ratio of the length of the short sides and the length of the long sides is preferably smaller than 0.3, more preferably smaller than 0.2 and still more preferably smaller than 0.1.

Preferably a ratio of the thickness t2a of the second welding bead portion B2a and the thickness t1a of the first welding bead portion B1a is equal to a ratio of a length of the short sides and a length of the long sides of the rectangle-shaped first plate 131a.

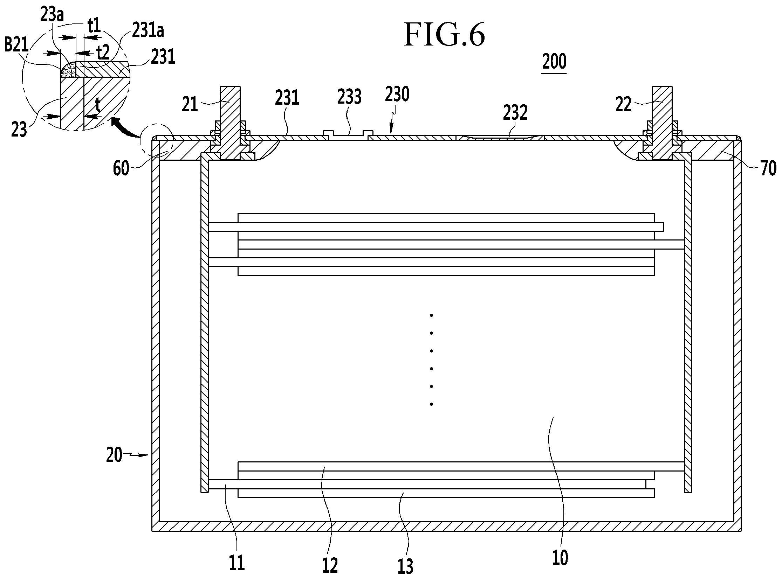

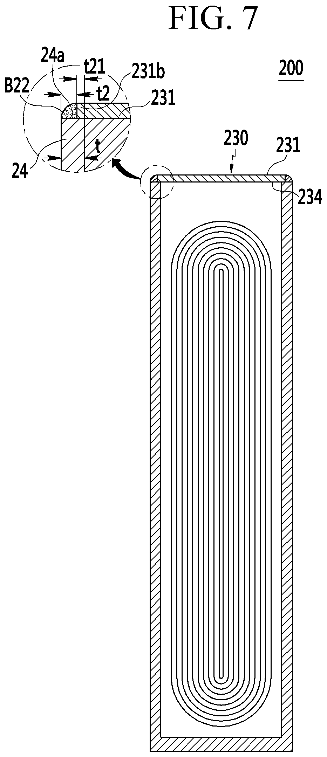

FIG. 6 is a cross-sectional view of a rechargeable battery according to a second exemplary embodiment of the present invention, viewed from a front direction, and FIG. 7 is a cross-sectional view of the rechargeable battery according to the second exemplary embodiment of the present invention, viewed from a side direction.

Referring to FIG. 6 and FIG. 7, a rechargeable battery 200 according to the present exemplary embodiment is the same as the rechargeable battery 100 according to the first exemplary embodiment, excluding a cap assembly 230, and therefore the same structure will not be further described.

The cap assembly 230 according to the present exemplary embodiment may include a cap plate 231 covering an opening of the case 20, a vent portion 232 where a notch is formed, and an electrolyte injection opening 233.

In addition, the cap plate 231 according to the present exemplary embodiment is coupled to an inlet portion of the opening of the case 20.

In further detail, the rectangle-shaped first plate 231 according to the present exemplary embodiment may include a pair of first ends 231a disposed at one end and a pair of second ends 231b disposed the other end. The second ends 231b connect the first ends 231a and they are disposed, facing each other.

Thus, when the cap plate 231 is provided in an inlet of an opening, the first ends 231a of the cap plate 231 may be provided in a first coupling portion 23a of a first side surface 23 of the case 20.

In addition, the second ends 231b of the cap plate 231 according to the present exemplary embodiment may be provided in a second coupling portion 24a of a second side surface 24 of the case 20.

Thus, the cap plate 231 can be coupled to the periphery area of an opening 25 of the case 20 by welding beads between portions of the first and second coupling portions 23a and 24a of the first and second side surfaces 23 and 24 of the case 20, in which the first and second ends 231a and 231b are not provided and the first and second ends 231a and 231b of the cap plate 231.

In further detail, a thickness t of the first side surface 23 of the case 20 may include a first thickness portion t1 and a second thickness portion t2 according to the present exemplary embodiment.

Here, the thickness of the first thickness portion t1 of the first side surface 23 according to the present exemplary embodiment may be equivalent to the length of the first ends 231a of the cap plate 231 provided in the first coupling portion 23a of the first side surface 23.

Thus, the length of the first end 231a of the cap plate 231 provided in the first coupling portion 23a of the first side surface 23 may be equivalent to the thickness of the first thickness portion t1 of the first side surface 23 according to the present exemplary embodiment.

In addition, the length of the portion where the cap plate 231 of the first coupling portion 23a is not provided may be equivalent to the thickness of the second thickness portion t2 of the first side surface 23 according to the present exemplary embodiment.

Thus, according to the present exemplary embodiment, a first welding bead portion B21 may be formed in a portion that corresponds to the second thickness portion t2 of the first side surface 23 of the case 20.

In this case, the thickness of the first welding bead portion B21 may be equivalent to the thickness of the second thickness portion t2 of the first side surface 23.

Further, the thickness of the second thickness portion t2 of the first side surface 23 is preferably 0.6 times the thickness t of the first side surface 23.

Thus, the thickness of the first welding bead portion B21 according to the present exemplary embodiment can be 0.6, that is, substantially 0.6 times the thickness t of the first side surface 23.

Since the first welding bead portion B21 is formed in the second thickness portion t2 of the first side surface, the first welding bead portion B21 does not protrude over the first side surface 23 of the case 20.

In addition, the second end 231 b of the cap plate 231 may be provided in a portion of the second coupling portion 24a of the second side surface 23 according to the present exemplary embodiment.

In further detail, the thickness t of the second side surface 24 of the case 20 according to the present exemplary embodiment may include a first thickness portion t1 and a second thickness portion t2.

Here, the thickness of the first thickness portion t1 of the second side surface 23 according to the present exemplary embodiment may be equivalent to the length of the second end 231b of the cap plate 231 provided in the second coupling portion 24a.

Thus, the length of the second end 231b of the cap plate 231 provided in the second coupling portion 23a of the second side surface 24 may be equivalent to the thickness of the first thickness portion t1 of the second side surface 23 according to the present exemplary embodiment.

In addition, the length of a portion where the cap plate 231 of the second coupling portion 24a is not provided may be equivalent to the thickness of the second thickness portion t2 of the second side surface 24 according to the present exemplary embodiment.

Thus, a second welding bead portion B22 may be formed in a portion corresponding to the second thickness portion t2 of the second side surface 24 of the case 20 according to the present exemplary embodiment.

In this case, according to the present exemplary embodiment, the thickness of the second welding bead portion B22 may be equivalent to the thickness of the second thickness portion t2 of the second side surface 24.

Further, the thickness of the second thickness portion t2 of the second side surface 24 according to the present exemplary embodiment is preferably 0.6 times the thickness t of the second side surface 24.

Thus, the thickness of the second welding bead portion B22 according to the present exemplary embodiment can be 0.6t, that is, substantially 0.6 times the thickness t of the second side surface 24.

Since the second welding bead portion B22 is formed in the second thickness portion t2 of the second side surface 24 according to the present exemplary embodiment, the second welding bead portion B22 does not protrude over the second side surface 24 of the case 20.

Thus, the case 20 can be prevented from being increased in volume by the welding beads formed in welding-coupling of the case 20 and the cap plate 231 in the rechargeable battery 200 according to the present exemplary embodiment.

In addition, the welding bead formed when the case 20 and the cap plate 231 are coupled by welding is electrically connected with another adjacent rechargeable battery so that internal short-circuit in the rechargeable battery 100 can be prevented according to the present exemplary embodiment.

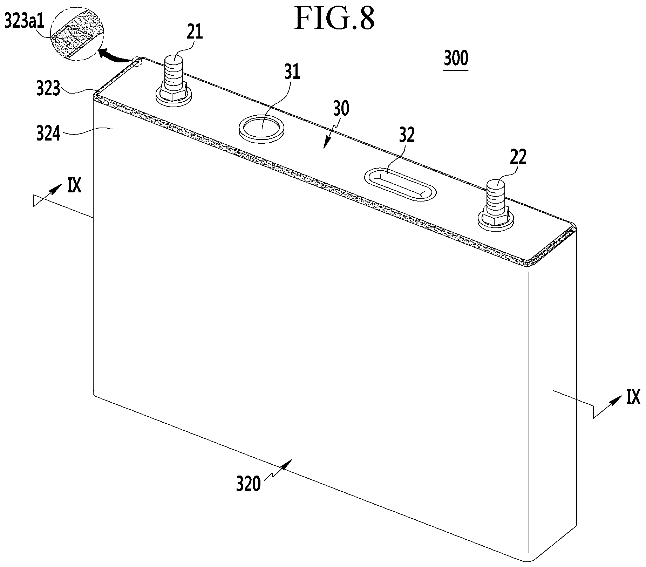

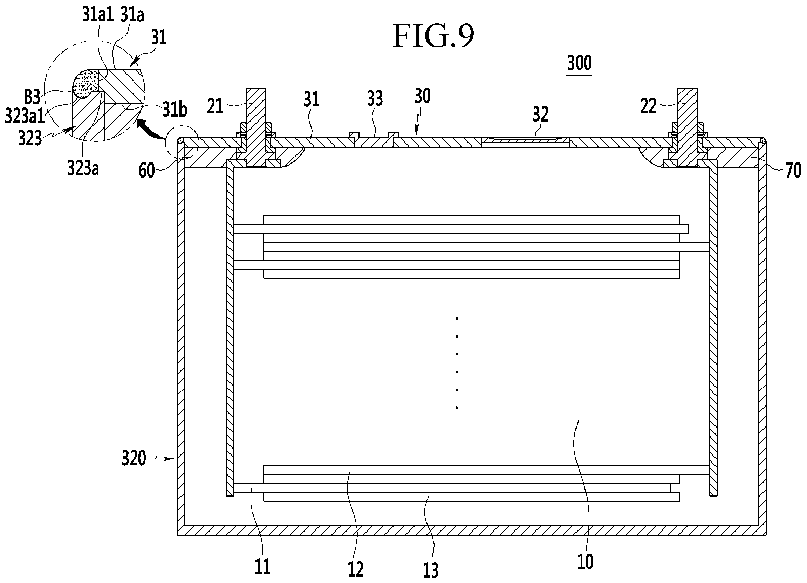

FIG. 8 is a perspective view of a rechargeable battery according to a third exemplary embodiment of the present invention and FIG. 9 is a cross-sectional view of the rechargeable battery of FIG. 8, taken along the line IX-IX.

Referring to FIG. 8 and FIG. 9, a rechargeable battery 300 according to the present exemplary embodiment includes the same configuration of the rechargeable battery 100 according to the first exemplary embodiment, except for a case 320, and therefore configurations of the rechargeable battery 300 that are equivalent to the configuration of the rechargeable battery 100 of the first exemplary embodiment of the present invention will not be further described.

The case 320 according to the present exemplary embodiment is formed in the shape of a prism, and include a pair of first side surfaces 232 facing each other and a pair of second side surfaces 324 connecting the pair of first side surfaces 323 and facing each other.

The first side surface 323 and the second side surface 324 of the case 320 according to the present exemplary embodiment may respectively include a first coupling portion 323a and a second coupling portion (not shown) to which the cap plate 31 is coupled.

Here, the second coupling portion (not shown) of the second side surface 324 of the case 320 according to the present exemplary embodiment is the same as the second coupling portion 24a of the second side surface 24 of the case 20 according to the first exemplary embodiment of the present invention, and therefore no further description will be provided.

A groove portion 323a1 may be formed along a width direction of the case 320 in the first coupling portion 323a of the first side surface 323 of the case 320 according to the present exemplary embodiment.

Thus, according to the present exemplary embodiment, a first welding bead portion B3 that connects the first plate 31a and the first coupling portion 323a of the case 320 can be formed over the groove portion 323a1 formed in the first coupling portion 323a and other portions of the first coupling portion 323a.

Since the area and the thickness of the first welding bead portion B3 are increased due to the groove portion formed in the first coupling portion 323a, the first plate 31a can be firmly coupled to the case 320 by the first welding bead portion B3.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**<Description of symbols>**

| | | | |
|---|---|---|---|
| 100: | rechargeable battery | 10: | electrode assembly |
| 11: | positive electrode | 12: | negative electrode |
| 13: | separator | 20: | case |
| 21: | positive terminal | 22: | negative terminal |
| 23, 323: | first side surface | 23a, 323a: | first coupling portion |
| 24: | second side surface | 25: | opening |
| 30: | cap assembly | | |
| 31, 131, 231: | cap plate | | |
| 31a, 131a: | first plate | 31a1, 131a1: | first end |
| 31a2, 131a2: | second end | 31b: | protruding portion |
| B1,B1a,B21, B3: | first welding bead portion | | |
| B2, B2a, B22: | second welding bead portion | | |
| 40: | first current collector | 50: | second current collector |
| 60: | first lower insulation member | | |
| 70: | second lower insulation member | | |

## Claims

1. A rechargeable battery (100) comprising:
an electrode assembly (10),
a case (20, 320) housing the electrode assembly (10);
a cap assembly (30) comprising a cap plate (31) coupled to an opening (25) of the case (20, 320);
**characterized in that**
the case (20, 320) comprises at least one side surface (23, 323, 24), wherein the at least one side surface (23, 323, 24) comprises at least one coupling portion (23a, 323a, 24a) located adjacent to the opening (25) of the case (20, 320), and
wherein the at least one coupling portion (23a, 323a, 24a) comprises an inner portion having a first width (t1) which directly contacts the cap plate (31) and an outer portion having a second width (t2) which is exposed from the cap plate (31),
wherein at least two welding bead portions (B1, B1a, B21, B3, B2, B2a, B22) are arranged in the outer portion of the at least one coupling portion (23a, 323a, 24a),
wherein a cross-section of the case (20, 320) in a portion of the opening (25) comprises a first length (L1) and a first width (W1) and the cap plate (31) comprises a third length (L3, L3a) and a third width (W3, W3a),
wherein the third length (L3, L3a) is smaller than the first length (L1) the third width (W3, W3a) is smaller than the first width (W1), and wherein a difference between the first length (L1) and the third length (L3, L3a) is larger than a difference between the first width (W1) and the third width (W3, W3a), and
wherein a thickness (t1a) of a welding bead portion (B1a) extending along the first width (W1) is thicker than a thickness (t2a) of a welding bead portion (B2a) extending along the first length (L1).

2. The rechargeable battery (100) of claim 1, wherein the cap plate (31) comprises an encircling side surface being formed parallel with respect to the at least one side surface (23, 323, 24) of the case (20).

3. The rechargeable battery (100) according to any one of the preceding claims, wherein the cap plate (31) comprises a first plate (31a) located in an outer portion of the cap plate (31) and a protruding portion (31b) located in a inner portion of the cap plate (31) and protruding inwards into the inner portion of the case (20, 320), the protruding portion (31b) having a fourth length and a fourth width, wherein the third length (L3, L3a) is larger than the fourth length and/or the third width (W3, W3a) is larger than the fourth width.

4. The rechargeable battery (100) of claim 1, wherein the opening (25) comprises a second length (L2) and a second width (W2) and wherein the second length (L2) is equal to the fourth length and/or the second width (W2) is equal to the fourth width.

5. The rechargeable battery (100) according to any one of the preceding claims, wherein the case (20, 320) comprises a pair of first side surfaces (23, 323) being arranged parallel to each other and a pair of second side surfaces (24) being arranged parallel to each other, wherein the first side surfaces (23, 323) comprise a first coupling portion (23a, 323a) located in an upper portion of the first side surfaces (23, 323) and the second side surfaces (24) comprise a second coupling portion (24a) located in an upper portion of the second side surfaces (24).

6. The rechargeable battery (100) of claim 5, wherein at least one of the first coupling portion (23a, 323a) and the second coupling portion (24a) comprises an inner portion having a first width (t1) which directly contacts the cap plate (31) and an outer portion having a second width (t2) which is exposed from the cap plate (31).

7. The rechargeable battery (100) of claim 6, wherein at least one welding bead portion (B1, B1a, B21, B3, B2, B2a, B22) is arranged in the outer portion of the first coupling portion (23a, 323a); and/or wherein at least one welding bead portion (B1, B1a, B21, B3, B2, B2a, B22) is arranged in the outer portion of the second coupling portion (24a).

8. The rechargeable battery (100) of claim 7, wherein the at least one welding bead portion (B1, B1a, B21, B3, B2, B2a, B22) is completely located within the outer portion of the first coupling portion (23a, 323a) and/or within the outer portion of the second coupling portion (24a).

9. The rechargeable battery (100) of claim 8, wherein a thickness of the at least one welding bead portion (B1, B1a, B21, B3, B2, B2a, B22) is lower than or equal to a portion of the cap plate (31) which is located above the first coupling portion (23a, 323a) and/or above the second coupling portion (24a).

10. The rechargeable battery (100) according to any one of claims 7 to 10, wherein the at least one welding bead portion (B1, B1a, B21, B3, B2, B2a, B22) contacts a planar side surface of the cap plate (31) and at least one of the first coupling portion (23a, 323a) and the second coupling portion (24a), wherein a cross-section of the at least one welding bead portion (B1, B1a, B21, B3, B2, B2a, B22) has a convex curvature extending between a first portion in which the at least one welding bead portion (B1, B1a, B21, B3, B2, B2a, B22) contacts an uppermost portion of the planar side surface of the cap plate (31) and a second portion in which the at least one welding bead portion (B1, B1a, B21, B3, B2, B2a, B22) contacts an outermost portion of the first coupling portion (23a, 323a) and/or the second coupling portion (24a).

11. The rechargeable battery (100) according to any one of claims 9 and 10, wherein the at least one welding bead portion (B1, B1a, B21, B3, B2, B2a, B22) completely surrounds the cap plate (31).

12. The rechargeable battery (100) according to any one of the preceding claims, wherein the first coupling portion (323a) comprises a groove portion (323a1) which extends along a length direction of the first coupling portion (323a).

13. The rechargeable battery (100) according to any one of claims 8 to 12, wherein a ratio of the width (t2, t1a) of the outer portion of the first coupling portion (23a, 323a) and a width (t) of the first side surfaces (23) ranges between 0.5 and 0.9; and/or wherein a ratio of the width (t2a) of the outer portion of the second coupling portion (24a) and a width (t) of the second side surfaces (24) ranges between 0.5 and 0.7.

14. The rechargeable battery (100) of claim 13, wherein a ratio of the width (t1a) of the outer portion of the first coupling portion (23a) and a width (t) of the first side surfaces (23) ranges between 0.7 and 0.9.

## Patentansprüche

1. Eine wiederaufladbare Batterie (100), aufweisend:
eine Elektrodenanordnung (10),
ein Gehäuse (20, 320), das die Elektrodenanordnung (10) aufnimmt;
eine Abdeckanordnung (30), die eine Abdeckplatte (31), die mit einer Öffnung (25) des Gehäuses (20, 320) gekoppelt ist, aufweist;
**dadurch gekennzeichnet, dass**
das Gehäuse (20, 320) zumindest eine Seitenfläche (23, 323, 24) aufweist, wobei die zumindest eine Seitenfläche (23, 323, 24) zumindest einen Kopplungsabschnitt (23a, 323a, 24a), der benachbart zur Öffnung (25) des Gehäuses (20, 320) angeordnet ist, aufweist, und
wobei der zumindest eine Kopplungsabschnitt (23a, 323a, 24a) einen Innenabschnitt aufweisend eine erste Breite (t1), der mit der Abdeckplatte (31) direkt in Kontakt steht, und einen Außenabschnitt aufweisend eine zweite Breite (t2), der gegenüber der Abdeckplatte (31) freiliegt, aufweist,
wobei zumindest zwei Schweißwulstabschnitte (B1, B1a, B21, B3, B2, B2a, B22) im Außenabschnitt des zumindest einen Kopplungsabschnitts (23a, 323a, 24a) angeordnet sind,
wobei ein Querschnitt des Gehäuses (20, 320) in einem Abschnitt der Öffnung (25) eine erste Länge (L1) und eine erste Breite (W1) aufweist und die Abdeckplatte (31) eine dritte Länge (L3, L3a) und eine dritte Breite (W3, W3a) aufweist,
wobei die dritte Länge (L3, L3a) kleiner als die erste Länge (L1) ist, die dritte Breite (W3, W3a) kleiner als die erste Breite (W1) ist und wobei eine Differenz zwischen der ersten Länge (L1) und der dritten Länge (L3, L3a) größer als eine Differenz zwischen der ersten Breite (W1) und der dritten Breite (W3, W3a) ist, und
wobei eine Dicke (t1a) eines Schweißwulstabschnitts (B1a), der sich entlang der ersten Breite (W1) erstreckt, dicker als eine Dicke (t2a) eines Schweißwulstabschnitts (B2a), der sich entlang der ersten Länge (L1) erstreckt, ist.

2. Die wiederaufladbare Batterie (100) nach Anspruch 1, wobei die Abdeckplatte (31) eine umlaufende Seitenfläche, die parallel bezüglich der zumindest einen Seitenfläche (23, 323, 24) des Gehäuses (20) ausgebildet ist, aufweist.

3. Die wiederaufladbare Batterie (100) nach einem der vorhergehenden Ansprüche, wobei die Abdeckplatte (31) eine erste Platte (31a), die in einem Außenabschnitt der Abdeckplatte (31) angeordnet ist, und einen vorstehenden Abschnitt (31b), der in einem Innenabschnitt der Abdeckplatte (31) angeordnet ist und nach innen in den Innenabschnitt des Gehäuses (20, 320) ragt, aufweist, wobei der vorstehende Abschnitt (31b) eine vierte Länge und eine vierte Breite aufweist, wobei die dritte Länge (L3, L3a) größer als die vierte Länge ist und/oder die dritte Breite (W3, W3a) größer als die vierte Breite ist.

4. Die wiederaufladbare Batterie (100) nach Anspruch 1, wobei die Öffnung (25) eine zweite Länge (L2) und eine zweite Breite (W2) aufweist und wobei die zweite Länge (L2) gleich der vierten Länge ist und/oder die zweite Breite (W2) gleich der vierten Breite ist.

5. Die wiederaufladbare Batterie (100) nach einem der vorhergehenden Ansprüche, wobei das Gehäuse (20, 320) ein Paar erster Seitenflächen (23, 323), die parallel zueinander angeordnet sind, und ein Paar zweiter Seitenflächen (24), die parallel zueinander angeordnet sind, aufweist, wobei die ersten Seitenflächen (23, 323) einen ersten Kopplungsabschnitt (23a, 323a), der in einem oberen Abschnitt der ersten Seitenflächen (23, 323) angeordnet ist, aufweisen und die zweiten Seitenflächen (24) einen zweiten Kopplungsabschnitt (24a), der in einem oberen Abschnitt der zweiten Seitenflächen (24) angeordnet ist, aufweisen.

6. Die wiederaufladbare Batterie (100) nach Anspruch 5, wobei zumindest einer des ersten Kopplungsabschnitts (23a, 323a) und des zweiten Kopplungsabschnitts (24a) einen Innenabschnitt aufweisend eine erste Breite (t1), der mit der Abdeckplatte (31) direkt in Kontakt steht, und einen Außenabschnitt aufweisend eine zweite Breite (t2), der gegenüber der Abdeckplatte (31) freiliegt, aufweist.

7. Die wiederaufladbare Batterie (100) nach Anspruch 6, wobei zumindest ein Schweißwulstabschnitt (B1, B1a, B21, B3, B2, B2a, B22) im Außenabschnitt des ersten Kopplungsabschnitts (23a, 323a) angeordnet ist; und/oder wobei zumindest ein Schweißwulstabschnitt (B1, B1a, B21, B3, B2, B2a, B22) im Außenabschnitt des zweiten Kopplungsabschnitts (24a) angeordnet ist.

8. Die wiederaufladbare Batterie (100) nach Anspruch 7, wobei der zumindest eine Schweißwulstabschnitt (B1, B1a, B21, B3, B2, B2a, B22) vollständig im Außenabschnitt des ersten Kopplungsabschnitts (23a, 323a) und/oder im Außenabschnitt des zweiten Kopplungsabschnitts (24a) angeordnet ist.

9. Die wiederaufladbare Batterie (100) nach Anspruch 8, wobei eine Dicke des zumindest einen Schweißwulstabschnitts (B1, B1a, B21, B3, B2, B2a, B22) kleiner als oder gleich einem Abschnitt der Abdeckplatte (31), der über dem ersten Kopplungsabschnitt (23a, 323a) und/oder über dem zweiten Kopplungsabschnitt (24a) angeordnet ist, ist.

10. Die wiederaufladbare Batterie (100) nach einem der Ansprüche 7 bis 10, wobei der zumindest eine Schweißwulstabschnitt (B1, B1a, B21, B3, B2, B2a, B22) mit einer ebenen Seitenfläche der Abdeckplatte (31) und zumindest einem des ersten Kopplungsabschnitts (23a, 323a) und des zweiten Kopplungsabschnitts (24a) in Kontakt steht, wobei ein Querschnitt des zumindest einen Schweißwulstabschnitts (B1, B1a, B21, B3, B2, B2a, B22) eine konvexe Krümmung, die sich zwischen einem ersten Abschnitt, in dem der zumindest eine Schweißwulstabschnitt (B1, B1a, B21, B3, B2, B2a, B22) mit einem obersten Abschnitt der ebenen Seitenfläche der Abdeckplatte (31) in Kontakt steht, und einem zweiten Abschnitt, in dem der zumindest eine Schweißwulstabschnitt (B1, B1a, B21, B3, B2, B2a, B22) mit einem äußersten Abschnitt des ersten Kopplungsabschnitts (23a, 323a) und/oder des zweiten Kopplungsabschnitts (24a) in Kontakt steht, erstreckt.

11. Die wiederaufladbare Batterie (100) nach einem der Ansprüche 9 und 10, wobei der zumindest eine Schweißwulstabschnitt (B1, B1a, B21, B3, B2, B2a, B22) die Abdeckplatte (31) vollständig umgibt.

12. Die wiederaufladbare Batterie (100) nach einem der vorhergehenden Ansprüche, wobei der erste Kopplungsabschnitt (323a) einen Nutabschnitt (323a1), der sich entlang einer Längsrichtung des ersten Kopplungsabschnitts (323a) erstreckt, aufweist.

13. Die wiederaufladbare Batterie (100) nach einem der Ansprüche 8 bis 12, wobei ein Verhältnis der Breite (t2, t1a) des Außenabschnitts des ersten Kopplungsabschnitts (23a, 323a) und einer Breite (t) der ersten Seitenflächen (23) in einem Bereich zwischen 0,5 und 0,9 liegt; und/oder wobei ein Verhältnis der Breite (t2a) des Außenabschnitts des zweiten Kopplungsabschnitts (24a) und einer Breite (t) der zweiten Seitenflächen (24) in einem Bereich zwischen 0,5 und 0,7 liegt.

14. Die wiederaufladbare Batterie (100) nach Anspruch 13, wobei ein Verhältnis der Breite (t1a) des Außenabschnitts des ersten Kopplungsabschnitts (23a) und einer Breite (t) der ersten Seitenflächen (23) in einem Bereich zwischen 0,7 und 0,9 liegt.

## Revendications

1. Batterie rechargeable (100) comprenant :
un ensemble d'électrodes (10),
un boîtier (20, 320) logeant l'ensemble d'électrodes (10) ;
un ensemble de recouvrement (30) comprenant une plaque de recouvrement (31) accouplée à une ouverture (25) du boîtier (20, 320) ;
**caractérisée en ce que**
le boîtier (20, 320) comprend au moins une surface latérale (23, 323, 24), où l'au moins une surface latérale (23, 323, 24) comprend au moins une partie d'accouplement (23a, 323a, 24a) située adjacente à l'ouverture (25) du boîtier (20, 320), et
dans laquelle l'au moins une partie d'accouplement (23a, 323a, 24a) comprend une partie intérieure ayant une première largeur (t1) qui est directement en contact avec la plaque de recouvrement (31) et une partie extérieure ayant une deuxième largeur (t2) qui est exposée à partir de la plaque de recouvrement (31),
dans laquelle au moins deux parties de cordon de soudure (B1, B1a, B21, B3, B2, B2a, B22) sont agencées dans la partie extérieure de l'au moins une partie d'accouplement (23a, 323a, 24a),
dans laquelle une section transversale du boîtier (20, 320) dans une partie de l'ouverture (25) comprend une première longueur (L1) et une première largeur (W1) et la plaque de recouvrement (31) comprend une troisième longueur (L3, L3a) et une troisième largeur (W3, W3a),
dans laquelle la troisième longueur (L3, L3a) est plus petite que la première longueur (L1), la troisième largeur (W3, W3a) est plus petite que la première largeur (W1), et dans laquelle une différence entre la première longueur (L1) et la troisième longueur (L3, L3a) est plus grande qu'une différence entre la première largeur (W1) et la troisième largeur (W3, W3a), et
dans laquelle une épaisseur (t1a) d'une partie de cordon de soudure (B1a) s'étendant le long de la première largeur (W1) est plus grande qu'une épaisseur (t2a) d'une partie de cordon de soudure (B2a) s'étendant le long de la première longueur (L1).

2. Batterie rechargeable (100) selon la revendication 1, dans laquelle la plaque de recouvrement (31) comprend une surface latérale d'encerclement formée parallèlement à l'au moins une surface latérale (23, 323, 24) du boîtier (20).

3. Batterie rechargeable (100) selon l'une quelconque des revendications précédentes, dans laquelle la plaque de recouvrement (31) comprend une première plaque (31a) située dans une partie extérieure de la plaque de recouvrement (31) et une partie saillante (31b) située dans une partie intérieure de la plaque de recouvrement (31) et faisant saillie vers l'intérieur dans la partie intérieure du boîtier (20, 320), la partie saillante (31b) ayant une quatrième longueur et une quatrième largeur, dans laquelle la troisième longueur (L3, L3a) est plus grande que la quatrième longueur et/ou la troisième largeur (W3, W3a) est plus grande que la quatrième largeur.

4. Batterie rechargeable (100) selon la revendication 1, dans laquelle l'ouverture (25) comprend une deuxième longueur (L2) et une deuxième largeur (W2) et dans laquelle la deuxième longueur (L2) est égale à la quatrième longueur et/ou la deuxième largeur (W2) est égale à la quatrième largeur.

5. Batterie rechargeable (100) selon l'une quelconque des revendications précédentes, dans laquelle le boîtier (20, 320) comprend une paire de premières surfaces latérales (23, 323) agencées parallèlement l'une à l'autre et une paire de deuxièmes surfaces latérales (24) agencées parallèlement l'une à l'autre, dans laquelle les premières surfaces latérales (23, 323) comprennent une première partie d'accouplement (23a, 323a) située dans une partie supérieure des premières surfaces latérales (23, 323) et les deuxièmes surfaces latérales (24) comprennent une deuxième partie d'accouplement (24a) située dans une partie supérieure des deuxièmes surfaces latérales (24).

6. Batterie rechargeable (100) selon la revendication 5, dans laquelle au moins l'une de la première partie d'accouplement (23a, 323a) et de la deuxième partie d'accouplement (24a) comprend une partie intérieure ayant une première largeur (t1) qui est directement en contact avec la plaque de recouvrement (31) et une partie extérieure ayant une deuxième largeur (t2) qui est exposée à partir de la plaque de recouvrement (31).

7. Batterie rechargeable (100) selon la revendication 6, dans laquelle au moins une partie de cordon de soudure (B1, B1a, B21, B3, B2, B2a, B22) est agencée dans la partie extérieure de la première partie d'accouplement (23a, 323a) ; et/ou dans laquelle au moins une partie de cordon de soudure (B1, B1a, B21, B3, B2, B2a, B22) est agencée dans la partie extérieure de la deuxième partie d'accouplement (24a).

8. Batterie rechargeable (100) selon la revendication 7, dans laquelle l'au moins une partie de cordon de soudure (B1, B1a, B21, B3, B2, B2a, B22) est complètement située dans la partie extérieure de la première partie d'accouplement (23a, 323a) et/ou dans la partie extérieure de la deuxième partie d'accouplement (24a).

9. Batterie rechargeable (100) selon la revendication 8, dans laquelle une épaisseur de l'au moins une partie de cordon de soudure (B1, B1a, B21, B3, B2, B2a, B22) est inférieure ou égale à une épaisseur d'une partie de la plaque de recouvrement (31) qui est située au-dessus de la première partie d'accouplement (23a, 323a) et/ou au-dessus de la deuxième partie d'accouplement (24a).

10. Batterie rechargeable (100) selon l'une quelconque des revendications 7 à 10, dans laquelle l'au moins une partie de cordon de soudure (B1, B1a, B21, B3, B2, B2a, B22) est en contact avec une surface latérale plane de la plaque de recouvrement (31) et avec au moins l'une de la première partie d'accouplement (23a, 323a) et de la deuxième partie d'accouplement (24a), dans laquelle une section transversale de l'au moins une partie de cordon de soudure (B1, B1a, B21, B3, B2, B2a, B22) a une courbure convexe s'étendant entre une première partie dans laquelle l'au moins une partie de cordon de soudure (B1, B1a, B21, B3, B2, B2a, B22) est en contact avec une partie la plus haute de la surface latérale plane de la plaque de recouvrement (31) et une deuxième partie dans laquelle l'au moins une partie de cordon de (B1, B1a, B21, B3, B2, B2a, B22) est en contact avec une partie la plus à l'extérieur de la première partie d'accouplement (23a, 323a) et/ou de la deuxième partie d'accouplement (24a).

11. Batterie rechargeable (100) selon l'une quelconque des revendications 9 et 10, dans laquelle l'au moins une partie de cordon de soudure (B1, B1a, B21, B3, B2, B2a, B22) entoure complètement la plaque de recouvrement (31).

12. Batterie rechargeable (100) selon l'une quelconque des revendications précédentes, dans laquelle la première partie d'accouplement (323a) comprend une partie de rainure (323a1) qui s'étend le long d'une direction de longueur de la première partie d'accouplement (323a).

13. Batterie rechargeable (100) selon l'une quelconque des revendications 8 à 12, dans laquelle un rapport entre la largeur (t2, t1a) de la partie la plus à l'extérieur de la première partie d'accouplement (23a, 323a) et une largeur (t) des premières surfaces latérales (23) est compris entre 0,5 et 0,9 ; et/ou dans laquelle un rapport entre la largeur (t2a) de la partie la plus à l'extérieur de la deuxième partie d'accouplement (24a) et une largeur (t) des deuxièmes surfaces latérales (24) est compris entre 0,5 et 0,7.

14. Batterie rechargeable (100) selon la revendication 13, dans laquelle un rapport entre la largeur (t1a) de la partie la plus à l'extérieur de la première partie d'accouplement (23a) et une largeur (t) des premières surfaces latérales (23) est compris entre 0,7 et 0,9.
